# EUROPEAN PATENT APPLICATION

(11) **EP 4 763 543 A1**
(43) Date of publication of application: **24.06.2026**
(21) Application number: 24222860.9
(22) Date of filing: 23.12.2024
(51) Int. Cl.: B60D 1/02, B62B 11/00, B62D 63/00, B66F 9/00, G05D 1/00

(54) **MOBILE ROBOT ENGAGING WITH AND TRANSPORTING A RELATIVELY HEAVILY LOADED PAYLOAD TRANSPORT VEHICLE**

(71) Applicant: Robotize ApS, 2800 Kgs. Lyngby (DK)
(72) Inventor: MURPHY, Brian Thomas, 2800 Kongens Lyngby (DK); LARSEN, Ole Brix, 2800 Kongens Lyngby (DK); HANSEN, Lars Theil, 2800 Kongens Lyngby (DK)
(74) Representative: Guardian IP Consulting I/S

(57) **Abstract**

The present disclosure relates to a mobile robot (100) configured to transport a payload transport vehicle (200) or the like, carrying, at least at some times, a payload (300), the mobile robot (100) comprising a payload transport vehicle engagement element (150), a load or force sensor (130) functionally connected (135) to the payload transport vehicle engagement element (150), a control element (110), and at least one active wheel or other active robot driving element (140) configured to the move the mobile robot (100) on a surface (175), wherein the payload transport vehicle engagement element (150) is configured to engage with and apply a controllable force (Fₓ) to the payload transport vehicle (200) in response to a control signal (125), to be transported or being transported by the mobile robot (100), whereby the mobile robot (100) receives at least a part of a load of the payload transport vehicle (200) via the payload transport vehicle engagement element (150), where the received load of the payload transport vehicle (200) is proportional to the applied force (Fₓ), at least a part of the received load of the payload transport vehicle (200) is distributed to at least one of the at least one active wheel or other active robot driving element (140), the load or force sensor (130) is configured to determine or estimate a current load or force applied on or to the payload transport vehicle engagement element (150) by the load of the payload transport vehicle (200) and to provide a sensor signal (135) in response thereto, and the control element (110) is configured to receive the sensor signal (135) and to provide the control signal (125) in response to or as a function of the received sensor signal (135).

## Description

### Field of the invention

The present invention relates generally to a mobile robot configured and designed to engage with and transport a payload transport vehicle such as a cart, a cage, a cabinet, a transport platform, or the like. More particularly, the present invention relates to a mobile robot configured to transport a payload transport vehicle carrying a relatively heavy payload (i.e. heavy in relation to the robot's own weight), where the payload transport vehicle particularly is a wheel-based and/or non-self-driven payload transport vehicle.

### Background

The use of mobile robots, and in particular autonomous mobile robots (AMRs), for automation and semi-automation purpose have greatly increased. Such mobile robots and AMRs are generally known in the field. Other types of mobile robots include automated guided vehicles (AGVs), that follow a marker line, magnetic strip or trails, etc., self-driving robots/vehicles (SDRs/SDVs), etc.

Some of these robots are respectively designed for transporting a payload in various ways. Some are designed to transport the payload when carried directly by the robot itself and others are designed to transport the payload using one or more separate payload transport vehicles. Some are designed to transport a payload using a directly carried pallet or the like while others are designed to transport a payload transport vehicle carrying the payload, such as a cart, cage, etc.

Typically, payload transport vehicles like carts, cages, etc. are used for payloads up to a maximum of about 500 to about 700 kilograms whereas a pallet is often used for heavier payloads. However, for certain needs it is desirable to use a payload transport vehicle like a cart, cage, etc. instead of a pallet or other since a cart, cage, etc. e.g. has the advantage that it (in addition to being transported by a mobile robot) can be operated (moved around) by a human operator even in production areas with more limited space. However, when transporting a payload transport vehicle like a cart, cage, etc. carrying a relatively heavy payload (as compared to the robot's own weight), e.g. in excess of 300 kilograms or more (for robots having an own weight of about 100 - 120 kilograms), and even as much as about 1.000 kilograms or more, certain challenges arise.

Some typical mobile robots or AMRs, AGVs, SDRs/SDVs, etc. (forth equally referred to simply as mobile robot or robot) for certain uses weigh by themselves typically about 100 kilograms or a bit more, e.g. about 120 kilograms, which may cause issues when transporting such loads (300 kilograms or more and even up to about 1.000 kilograms) both in general but especially in particular when transported by a payload transport vehicle like a cart, cage, transport platform, etc. The robot may experience too little friction for its active wheels to ensure reliable driving and when accelerating and turning there is a risk the robot may skid, tip, tilt, or have a skewed or shifted orientation (e.g. be exposed to a high force e.g. at the front and be exposed to much less force e.g. at the back leading to various potential issues, in particular for payload transport vehicles like carts, etc. carrying a payload comprising many separate objects or objects of uneven weight distribution.

Some previous solutions involve adding additional weight, e.g. by adding metal like iron, to the interior of the robot itself to increase the friction for its active wheels. Adding, such additional weight requires space, which many current mobile robots do not have in sufficient quantity, or it would then at least increase the size of the robot making it much less flexible and requiring more space e.g. on a production or manufacturing floor or barring it from accessing certain openings or equipment. In any event, it would typically only be possible to add about 10 to perhaps about 20 kilograms or so (using iron) without increasing the size too much for many or even most types of robots (used for transporting a payload transport vehicle like a cart, etc. with a relatively heavy payload (compared to the robot's own weight)). Regardless of how much weight can be added in this way, it typically will be too little by an order of a magnitude. So even if the weight could be increased some, it would (within reason) be far too little compared to what is necessary or beneficial. Furthermore, adding weight in this way also adds further costs to a robot (both for the raw-materials and for the required processing thereof).

And once added, the additional weight would increase the power consumption required for driving the robot and the robot's ability to accelerate and brake will also be diminished.

Certain solutions add a so-called top-module or similar where additional weight can be added to the robot by arranging the top-module on top of the robot, where typically the additional weight comes to some extent from the weight of the top-module itself but more significantly the additional weight comes mostly or more from the space the top-module provides that can be loaded or filled with heavy material such as iron, etc. However, this adds to the size of the robot, in particular in height, which is not always optimal, adds costs, and furthermore shifts the center of mass upwards.

It would be an advantage to provide a mobile robot that is capable of reliably and securely transporting a payload transport vehicle, such as a cart, cage, transport platform, etc., carrying a payload weighing much in relation to the weight of the robot (i.e. carrying relatively heavy payloads), in particular without increasing the weight of the robot itself, or at least not significantly so. Furthermore, it would be an advantage to improve a robot's handling and driving capabilities while transporting relatively heavy payloads. It would also be an advantage to provide a mobile robot that reliably can accommodate the transport of (relatively heavy) differently weighing payloads. Furthermore, it would be an advantage to provide a system of such a mobile robot and such a payload transport vehicle.

It is an object to provide a mobile robot alleviating one or more of the above-mentioned drawbacks, at least to an extent and/or providing one or more of the above-mentioned advantages, at least to an extent.

### Summary

According to a first aspect, this is achieved, at least to an extent, by a mobile robot configured to transport a payload transport vehicle or the like, carrying, at least at some times, a payload. The mobile robot comprises
- a payload transport vehicle engagement element,
- a load or force sensor functionally connected to the payload transport vehicle engagement element,
- a control element, and
- at least one active wheel or other active robot driving element configured to the move the mobile robot on a surface.

Furthermore, the payload transport vehicle engagement element is configured to engage with and apply a controllable force to the payload transport vehicle (to be transported or being transported by the mobile robot) in response to a control signal. Accordingly, the mobile robot receives at least a part of a load of the payload transport vehicle via the payload transport vehicle engagement element, where the received load of the payload transport vehicle is proportional to the applied force. Additionally, at least a part of the received load of the payload transport vehicle is distributed to at least one of the at least one active wheel (or other active robot driving element). Additionally, the load or force sensor is configured to determine or estimate a current load or force applied on or to the payload transport vehicle engagement element by the load of the payload transport vehicle and to provide a sensor signal in response thereto. The control element is configured to receive the sensor signal and to provide the control signal in response to or as a function of the received sensor signal.

In this way, an increased load or acting force (as at least a part of the load of the payload transport vehicle including its payload, when/if any) on the robot is provided by applying a force on the payload transport vehicle that enables the mobile robot to be able to transport a relatively higher payload (in relation to the own weight of the robot) in a more reliable way and in particular without the need for adding weight permanently or semi-permanently to the robot. Furthermore, the acting force or load of the payload transport vehicle (and payload if any) can be controlled and regulated by regulating the applied controllable force that is applied to the payload transport vehicle. The regulation of the resulting load/force on the robot may be regulated dynamically, e.g. by a closed feedback control loop) or be set (more statically) in response to a given situation or need. In some embodiments, the applied force is applied (to the payload transport vehicle) linearly. In alternative embodiments, the applied force is applied (to the payload transport vehicle) non-linearly.

As mentioned, the invention is particularly applicable for mobile robots where the own weight of the mobile robot is not otherwise sufficiently large in relation to the weight of a payload transport vehicle including payload that the mobile robot is to transport.

In some embodiments, the payload transport vehicle engagement element comprises or is connected to a spring or resilient element arrangement and is configured to apply the controllable force to the payload transport vehicle in response to the spring or resilient element arrangement being pushed or compressed. The applied controllable force will typically depend on the spring force and the spring characteristic and may be designed to that effect in view of a particular need.

In some embodiments, the mobile robot comprises an actuator configured to compress, directly or indirectly, the spring or resilient element arrangement in response to the control signal, by applying a force or by moving (linearly or non-linearly) an element connected to the actuator.

In some embodiments, the payload transport vehicle engagement element is configured to extend out and/or away from the mobile robot in order to securely engage with the payload transport vehicle.

In some embodiments, the payload transport vehicle engagement element is configured to extend out and away from (e.g. an upper surface of) the mobile robot in a vertical or substantially vertical direction (i.e. a vertical direction when the robot is located on a planar ground surface).

In some embodiments, the mobile robot comprises at least one, e.g. or preferably three or four, payload transport vehicle engagement elements and a load or force sensor for each payload transport vehicle engagement elements, wherein the load or force sensor for a particular payload transport vehicle engagement element is configured to determine or estimate a current load applied on or to the particular payload transport vehicle engagement element by the respective load of the payload transport vehicle.

In some embodiments, a load or force sensor determines or estimates a current load applied on or to a plurality (e.g. two or alternatively more) of payload transport vehicle engagement elements.

In some embodiments, the mobile robot comprises a plurality of payload transport vehicle engagement elements, wherein each payload transport vehicle engagement element engage is configured to apply a respective controllable force to the payload transport vehicle in response to a respective control signal.

In some embodiments, an actuator and a sensor are provided separately for each payload transport vehicle engagement element.

In some embodiments, an actuator applies a force to or for a payload transport vehicle engagement element (one actuator for each payload transport vehicle engagement element). In alternative embodiments, an actuator or actuator assembly applies a force to or for a plurality of payload transport vehicle engagement elements.

In some embodiments, at least a portion, e.g. all, of the mobile robot has a height enabling the at least a portion, e.g. all, of the mobile robot to fit under the payload transport vehicle when engaged by payload transport vehicle engagement element.

In some embodiments, the mobile robot comprises
- an upper surface comprising an opening for each payload transport vehicle engagement element, a respective opening configured to receive a respective payload transport vehicle engagement element and allow movement thereof,
- an actuator for each payload transport vehicle engagement element, the actuator respectively configured to move, preferably linearly move, a respective payload transport vehicle engagement element in response to a respective control signal, and/or
- an internal support frame or structure.

In some further embodiments, the actuator and the load or force sensor of a particular payload transport vehicle engagement element is arranged between the particular payload transport vehicle engagement element and the internal support frame or structure, where the load or force sensor is arranged closest to the internal support frame or structure, the actuator is arranged second closest to the internal support frame or structure, and the particular payload transport vehicle engagement element is arranged most distant to the internal support frame or structure. In alternative embodiments, the actuator is arranged closest to the internal support frame or structure, the load or force sensor is arranged second closest to the internal support frame or structure, and the particular payload transport vehicle engagement element is arranged most distant to the internal support frame or structure,

In some embodiments, the mobile robot is configured to
- increase the amount of the controllable force (Fₓ), applied by the at least one payload transport vehicle engagement element (150), until the control element (110) determines that the load of the payload transport vehicle (200) received by the mobile robot (100), as determined or estimated by the load or force sensor (130), does not change any further,
- reduce the amount of applied controllable force (Fₓ) from that level until the control element (110) determines that the load of the payload transport vehicle (200) received by the mobile robot (100), as determined or estimated by the load or force sensor (130), is at a predetermined level of applied force.

In some embodiments, the at least one payload transport vehicle engagement element is or comprises a pin, a peg, a rod, a mandrel, plate or other planar element, and/or any other suitable payload transport vehicle engagement element.

In some embodiments,
- the at least one payload transport vehicle engagement element are at least partly received internally by the mobile robot,
- the mobile robot comprises one or more non-active support wheels or other non-active robot driving element, e.g. swivel or castor wheels,
- the payload transport vehicle is a wheel borne cart, cage, or payload transport platform, and/or
- the mobile robot is an autonomous mobile robot (AMR).

In some further embodiments, the mobile robot/AMR comprises two active wheels or two other active robot driving elements and four non-active wheels or four other non-active robot driving elements.

In some embodiments, the mobile robot comprises a top-module, where the top-module comprises:
- the payload transport vehicle engagement element,
- the load or force sensor functionally connected to the payload transport vehicle engagement element, and
- the control element,
rather than the mobile robot.

Embodiments of a mobile robot comprising a top-module correspond to embodiments of a mobile robot without a top-module as disclosed herein (but where the described functionality and elements now are implemented by or from the top-module as applicable)..

According to a second aspect is provided a payload transport system comprising
- a mobile robot according to the first aspect and any embodiments thereof, and
- a payload transport vehicle or the like, carrying, at least at some times, a payload, wherein the payload transport vehicle is a wheel borne cart, cage, cabinet, or payload transport platform comprising a number of non-active wheels or other non-active driving elements (e.g. swivel or castor wheels) and comprise one or more of robot engagement elements configured to mate, connect, match with and/or otherwise accommodate or receive the corresponding payload transport vehicle engagement elements of the mobile robot.

Further details and embodiments are disclosed in the following.

### Definitions

All headings and sub-headings are used herein for convenience only and should not be constructed as limiting the invention in any way.

The use of any and all examples, or exemplary language provided herein, is intended merely to better illuminate the invention and does not pose a limitation on the scope of the invention unless otherwise claimed. No language in the specification should be construed as indicating any non-claimed element as essential to the practice of the invention.

This invention includes all modifications and equivalents of the subject matter recited in the claims appended hereto as permitted by applicable law.

### Brief description of the drawings

Figure 1 schematically illustrates a functional block diagram of a mobile robot as disclosed herein;
Figures 2A and 2B schematically illustrate an exemplary embodiment of a mobile robot as disclosed herein, illustrated in two different configurations;
Figure 2C schematically illustrates an exemplary embodiment of a payload transport vehicle, here in the form of a cart, to be used in connection with a mobile robot as disclosed herein;
Figure 2D schematically illustrates the cart of Figure 2C carrying a payload or similar;
Figures 3A and 3B schematically illustrate the mobile robot of Figures 2A and 2B and the cart carrying a payload of Figure 2D, with the mobile robot being in two different configurations;
Figures 4A and 4B schematically illustrate a more detailed embodiment of elements of the mobile robot of Figure 1 in two different configurations;
Figures 5A and 5B schematically illustrate a more detailed alternative embodiment of elements of the mobile robot of Figure 1 in two different configurations;
Figure 5C schematically illustrates one, more detailed, exemplary embodiment of a payload transport vehicle engagement element;
Figures 6A and 6B schematically illustrate relevant forces working on the mobile robot and the cart carrying a payload when the mobile robot is in two different configurations; and
Figure 7 schematically illustrates a perspective view of a more detailed embodiment of a mobile robot, in particular an autonomous mobile robot, as disclosed herein.

### Detailed description

Various aspects and embodiments of a mobile robot configured to transport a payload transport vehicle such as a cart, a cage, transport platform, or the like as disclosed herein will now be described with reference to the figures. In the following, a cart is given as an example of a payload transport vehicle and used for explaining the invention and embodiments thereof. Therefore, when a cart is mentioned in the following description, a payload transport vehicle is meant unless expressively stated otherwise, and is to include other types of payload transport vehicles than a cart, e.g. including cages, platforms, etc.

The shown figures are schematic representations for which reason the configuration of the different structures as well as their relative dimensions are intended to serve illustrative purposes only.

Some of the different components may only be disclosed in relation to a single embodiment of the invention but is/are meant to be included in the other embodiments without further explanation.

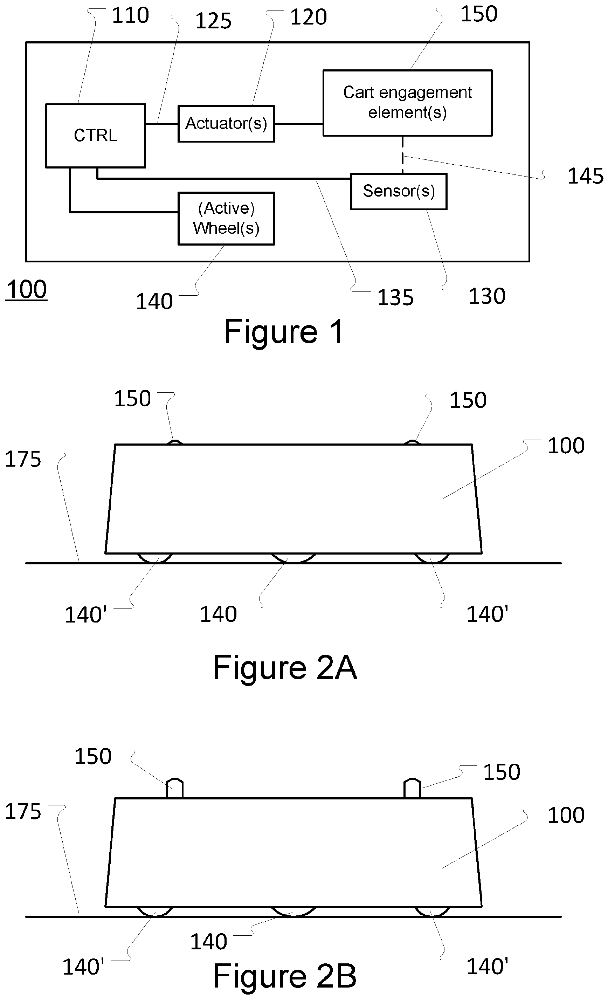

Figure 1 schematically illustrates a functional block diagram of a mobile robot as disclosed herein.

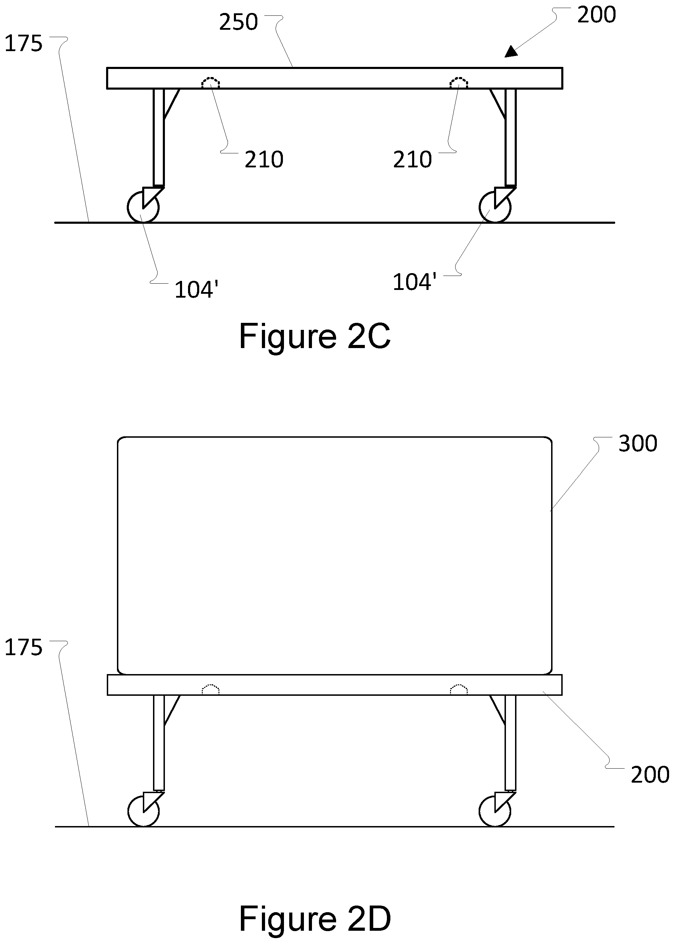

Illustrated is a functional block diagram of a mobile robot 100, e.g. or preferably an AMR or alternatively an AGV, SDR/SDV, etc., configured to transport a payload transport vehicle, here as an example a cart (see e.g. 200 in Figure 2C for an example of a cart and elsewhere) or similar, with a relatively heavy load (above about 300 kilograms (kg), e.g. about 1.000 kg, for a mobile robot with an own weight of, as an example, about 100 - 120 kgs). Generally, the mobile robot 100 is configured to transport a payload transport vehicle that (including payload) weigh substantially more than the transporting mobile robot itself.

The mobile robot 100 comprises one or more payload transport vehicle engagement elements 150 (forth equally referred to as cart engagement elements 150), one or more control elements 110 (such as one or more processors), one or more load sensors, load cells, force sensors, or similar 130, one or more active wheels 140 (also referred to as driven wheels, traction wheels, etc.) or other active robot driving elements, and one or more actuators 120 applying, at least in some embodiments, a controllable force to the cart, e.g. by controllably moving the cart engagement elements 150, in response to one or more control signals 125 provided by the control element 110 as explained in the following and as disclosed herein. Each sensor 130 provides a sensor signal 135 to the control element(s) 110 as explained further in the following and as disclosed herein. Preferably the mobile robot 100 is an electrical vehicle and further comprises a number of more or less standard elements (not shown), such as an electrical drive train or similar e.g. including power electronics, an electrical motor, a mechanical gear, a suspension, and so on, under the control of at least one or some of the one or more control elements 110 (and/or alternatively other control element(s) not illustrated) in order to drive and otherwise operate the mobile robot 100.

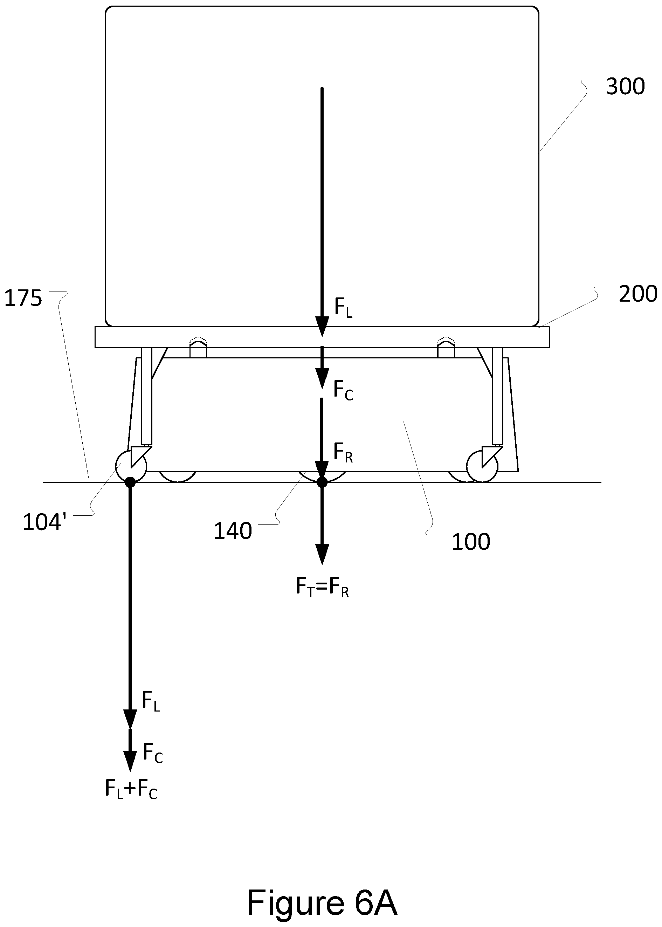

The cart engagement element(s) 150 is configured to apply a controllable force (see e.g. Fₓ in Fig. 6A) to the cart in response to the control signal 125 whereby the mobile robot 100 receives at least a part of a load of the cart via the cart engagement element(s) 150, where the received load of the cart is proportional to the applied force. The more controllable force that is applied, the more of the maximum load of the cart will be received.

In at least some embodiments, the cart engagement element(s) 150 is or comprises a pin, a peg, a rod, a mandrel, plate or other planar element, or similar, and/or any other suitable payload transport vehicle/cart engagement element.

In at least some embodiments, the cart engagement element(s) 150 are configured to also lock or at least fixate the cart when engaged.

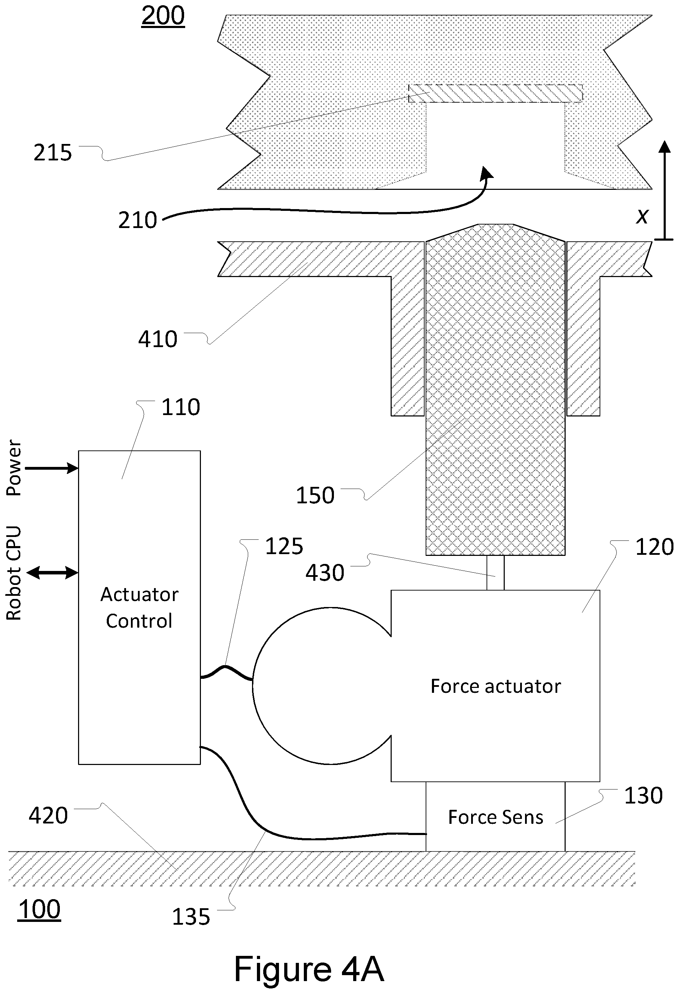

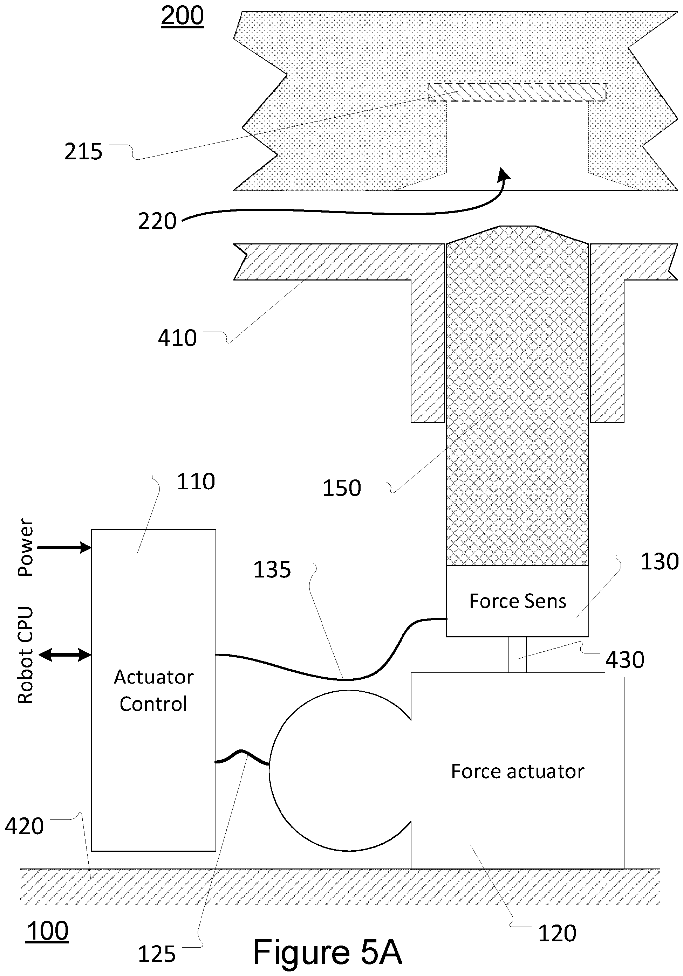

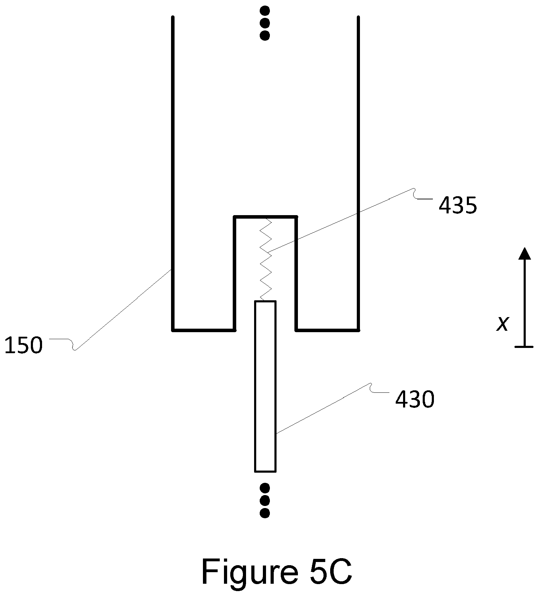

In some embodiments (e.g. as illustrated in Figs. 4A-4B and 5A-5B) the cart engagement element(s) 150 (each) comprises a preloaded or pretensioned spring or resilient element arrangement, or similar (see e.g. also 435 in Fig. 5C) that e.g. may be integral to the cart engagement element(s) 150 or otherwise be arranged, e.g. as explained in the following. Applying (a variable) position, by the (then position) actuator(s) 120, to the spring or resilient element arrangement will apply (a correspondingly variable) force to the cart engagement element(s) 150 applying (a correspondingly variable) force to the cart thereby transferring (a variable) proportion of the load of the cart to the robot 100. The cart engagement element(s) 150 are, at least in some further embodiments, configured to be extended, ejected, pushed, or the like out and/or away from the mobile robot 100 in order to securely engage with the cart (see e.g. 200 in Fig. 2C and elsewhere) carrying (at least some time during use) a payload where the cart (and payload) is transported or to be transported by the robot 100. As mentioned, the cart engagement elements 150 are configured to receive at least a part of the load of the cart (when/once engaged with the robot (100)) in a controllable manner where the force (due to the load of the cart and its payload (if currently any)) acting upon the robot 100 is transferred via the cart engagement elements 150 to the robot 100. A robot comprising a spring or resilient element arrangement in this manner has the advantage that a movement or positional movement, e.g. linear movement, of an actuator is transferred into an applied force depending on the extent of the movement. Alternative embodiments comprise other ways of transferring a controllable applied force than using a spring or resilient element arrangement. In at least some embodiments, the cart engagement element(s) 150 are extended, ejected, pushed, or the like out and/or away from the mobile robot 100 in a vertical or substantially vertical direction.

Furthermore, at least a part of the received load of the cart and payload is distributed to the active wheels 140 (and to any non-active supporting wheel(s), se e.g. 140' elsewhere) thereby increasing the friction between the active wheels and the surface the robot is moving on and enabling the robot to carry a relatively high payload (compared to its own weight) and improving the robot's handling and driving capabilities while doing so.

The sensor(s) 130 is/are at least functionally connected to the one or more cart engagement element(s) 150 and is/are configured to determine or estimate a current load or force applied on or to the respective cart engagement element(s) 150 (and thereby on or to the robot 100) by the acting force arising due to the load of the cart and its payload resting on or otherwise physically influencing the one or more cart engagement element(s) 150. In at least some embodiments, the sensor(s) 130 are mechanically (in addition to being functionally) connected to the one or more cart engagement element(s) 150 as indicated by the broken line 145. In some embodiments, the sensor 130 produces a signal, e.g. a voltage signal, that is proportional to the force (or load) being applied to the sensor 130.

The cart engagement element(s) 150 (for embodiments comprising a spring or resilient element arrangement as disclosed herein) is/are each configured to be variably extended or otherwise moved by or to a controllable extent or degree in response to the control signal 125 received from the control element 110. In this way, a controllable portion of the load or applied force of the cart to the robot 100 may readily be transferred via the cart engagement element(s) 150 to the robot 100. The more extended the cart engagement element(s) 150 are, the more force or load is effectively transferred to the robot 100.

In at least some preferred embodiments, the cart engagement elements 150 receives at least a part of the load or applied force of the cart by being arranged (together with at least a part of the robot 100) under the cart or at least under a (substantial) part of the cart where the cart thereby can rest on the cart engagement elements 150. This provides a very efficient and reliable way of transferring the load or applied force of the cart (and payload) to the robot. As mentioned, the more the cart engagement elements 150 applies a force to the cart, the more the cart engagement elements 150 `pushes' the cart (upwards) and the more load or applied force of the cart (and payload) will be transferred to the robot 100. It is even possible (at least in some embodiments) to lift the cart with its payload entirely so it fully rests on the cart engagement elements 150/the robot 100 whereby a maximum of the load will be transferred to the robot.

Accordingly, the extent of (for respective embodiments) or the amount of force applied by the cart engagement elements 150 governs how much load or force the cart and payload exerts on the robot 100 (via the cart engagement elements 150) and controlling the extent of the cart engagement elements 150/the applied force thereby efficiently and reliably controls the amount of load or force, due to the weight of the cart and payload thereof, being transferred to the robot 100.

Additionally, the control element 110 is configured to provide the control signal 125 (controlling the extent of/the force applied by the cart engagement elements 150) in response to or as a function of the determined or estimated current load or force of the cart as determined or estimated by the sensor(s) 130, i.e. in response to the sensor signal(s) 135. In this way, it is possible to regulate and control the transfer of load/force to the robot 100 and to its active wheel(s) 140 in a reliable and informed way (by knowing a quantity of the current load/force, which then can be used).

In some embodiments, the applied force is determined before or at initiating the transport of the cart and payload or at least somewhat statically or intermittently. In alternative, embodiments, the applied force is regulated continuously or ongoingly for example by implementing a feedback control loop using the sensor(s) 130, the control element(s) 110, and the actuator(s) 120.

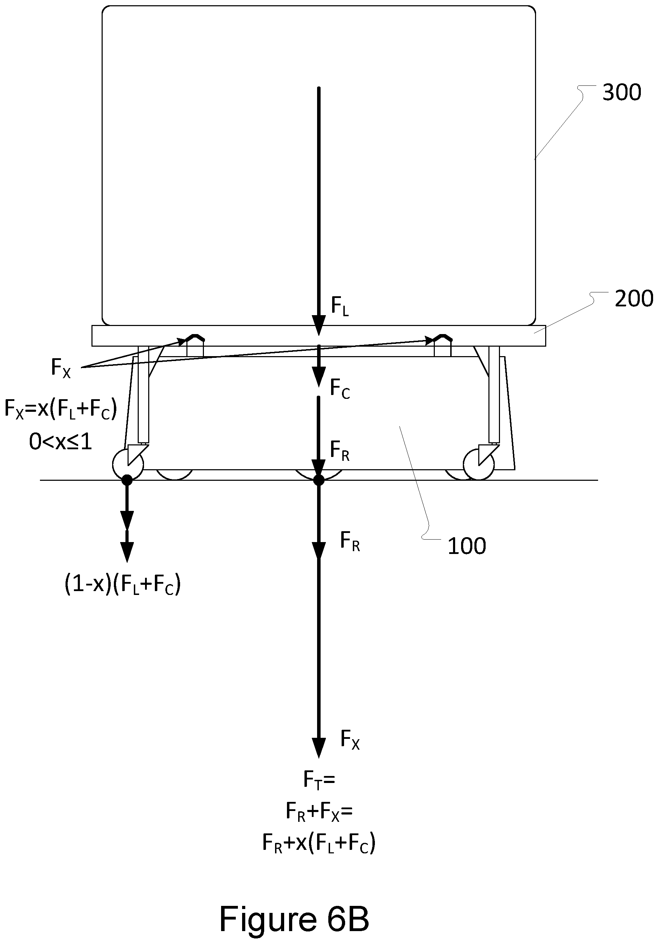

Further explanation and elaboration are given in the following, e.g. in connection with Figures 6A and 6B.

In some embodiments, the robot is controlled as described in the following. When the robot 100 is engaging the cart in preparation of transporting it, it applies force as disclosed herein, where force is applied, at least in some embodiments, equally by each cart engagement element 150. This is continued until the sensor(s) 130 register that the registered force (or load) being applied to the sensor(s) 130 does not change any further (i.e. it stops increasing). This happens at the moment the last part of the cart leaves the surface.

Even if the mobile robot is able to lift the cart completely, it generally will not be transported this way as the cart then will be more prone to move, tilt about, etc. since it does not rest (to some degree) on its own wheels or other supports. Furthermore, many types of AMRs also use some kind of navigation sensor, e.g. a laser scanner or the like. Lifting the cart of the surface could cause increased obstruction of the navigation sensor(s) (wheels typically block more than the supporting legs that the wheels are mounted on). Therefore, the force is reduced to a predetermined level. The predetermined level may e.g. be specific to the particular cart that is to be transported (e.g. including weight of the payload, the weight distribution of the cart and/or the payload, etc.). The predetermined level may alternatively be specific to the particular type of cart and/or payload or according to some other grouping. Such information and data may e.g. be stored in a look-up data structure or other suitable data structure that is accessible to the mobile robot.

The predetermined level may in addition vary from embodiment to embodiment. However, in at least some embodiments, the predetermined level is set to be between about 50% to 80% of the appliable force when the cart is lifted off its resting surface e.g. depending on one or more of use scenario, type of cart, type and weight of payload, weight distribution of cart including payload, etc. In some embodiments, the predetermined level is set to be between about 60% to about 70%, e.g. about 65%, but as mentioned it might vary.

This enables a secure and reliable transportation of the cart, where additional force is distributed to the active wheels of the robot as disclosed herein enabling the mobile robot to securely transport a heavier payload.

In case of a plurality of sensors, the registered force or load of the respective sensors may be summed providing a total force or load that is monitored (for when it stops increasing) and used (to subsequently set at a lower level).

In further embodiments, equal force is not applied equally by each cart engagement element 150. This may e.g. be used if it is known that the overall weight distribution of the cart and payload is offset to a too large degree. This can be controlled (at least better) but controlling the respective force applied by each cart engagement element 150.

In some situations, it might be that the applied force is not enough to lift the cart fully even when at maximum applied force. In such cases, the force may be reduced to a predetermined proportion of the maximum level of applied force. This may also be at between about 50% to 80%, between about 60% to about 70%, or e.g. about 65% of the maximum level (instead of being a % of the applied force level that the cart is lifted fully), but as mentioned it might vary.

It is to be noted, that each cart engagement elements 150 (in embodiments with more than one) does not necessarily need to be extended by the same amount or apply the same amount of force whereby the respective cart engagement elements 150 will not transfer the same amount of the load of the cart, which will influence the weight distribution of the robot 100 (including the transferred load of the cart), which allows controlling the weight distribution of the robot 100 by controlling which cart engagement element 150 receives what amount of the load (in addition to controlling the received overall load) by controlling the applied respective amounts of force by the cart engagement elements 150. The weight distribution can even be dynamically changed by dynamically changing the applied respective amounts of force of the cart engagement elements 150.

The control element(s) 110 (or some other control element(s)) may also control the active wheels 140 as generally known to move the robot 100.

In some embodiments, the robot 100 comprises two, three, or four cart engagement elements 150 and a separate actuator 120 and a separate load or force sensor 130 for each cart engagement element 150, but it may be different for other embodiments. There should be enough cart engagement elements 150 (for a particular type of cart) to ensure a secure and reliable engagement of the cart and load transfer thereof. Where the cart engagement elements 150 more precisely are arranged on and in the robot 100 also has a bearing on this. The number of cart engagement elements 150 will typically also depend on the number of active wheels. It is possible for embodiments to have only a single cart engagement element 150, e.g. for a three-wheel configuration (whereby the cart would or could more or less be towed after the robot and be secured to the robot only at a single location). If at least three cart engagement elements 150 are used, the stability of the transported cart is typically increased, e.g. so it cannot tip.

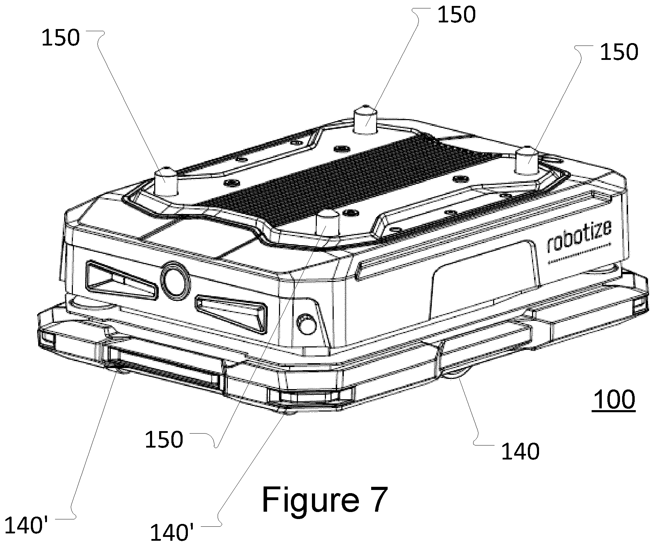

In some preferred embodiments (see e.g. Figure 7), the robot 100 has a more or less rectangular footprint and/or top piece where four cart engagement elements 150 are arranged near or at least towards each corner of the top piece. In other embodiments, the robot may comprise three cart engagement elements 150 arranged in a triangular pattern, e.g. two arranged near or towards each corner of the front of the mobile robot 100 and the last arranged center at or towards the back of the mobile robot 100. The robot 100 may also comprise more than four cart engagement elements 150 arranged in any suitable pattern or as previously mentioned comprise only a single cart engagement element 150.

While it is expedient and beneficial to implement or integrate the one or more payload transport vehicle/cart engagement elements 150, the one or more control elements 110, the one or more load sensors, etc. 130, and the one or more actuators 120 directly in the mobile robot 100, it is to be understood that the elements might also be implemented in a top-module or similar. This will add to the overall size of the robot, but a top-module with these elements (in a top-module) functioning as disclosed herein may transport the same payload as a larger traditional top-module while itself being smaller, or a top-module implementing the present invention being equally sized to a traditional top-module is able to transport a greater payload.

Further embodiments and details of a robot such as illustrated in Figure 1 are explained herein, e.g. in connection with the following Figures.

Figures 2A and 2B schematically illustrate an exemplary embodiment of a mobile robot as disclosed herein, illustrated in two different configurations.

Illustrated are side views of a particular embodiment of a mobile robot 100 as disclosed herein where Figure 2A schematically illustrates the robot with its cart engagement elements 150 being retracted, e.g. fully retracted, i.e. in a non-extended or non-engaged configuration, and Figure 2B schematically illustrates the robots with its cart engagement elements 150 being extended, e.g. fully extended, i.e. in an extended or engaged configuration.

As illustrated, the mobile robot 100 comprises a number (one or more) of cart engagement elements 150, here four as an example, two (as an example) active or driven wheels 140 (e.g. or preferably arranged centrally in the lengthwise front-to-back direction and out towards the 'left' and 'right' sides) and four (as an example) non-active or passive support wheels 140' (e.g. or preferably arranged in or near each corner of the robot 100), e.g. swivel or castor wheels. It is to be understood that other numbers of wheels 140, 140' and/or arrangements thereof may be used as long as the robot is able to drive stably and efficiently taking the particular cart and the payload thereof into account. Further illustrated is a surface 175 that the mobile robot 100 is to move upon.

See e.g. Figure 7 for a more detailed rendition of an exemplary embodiment of a robot 100 as disclosed herein.

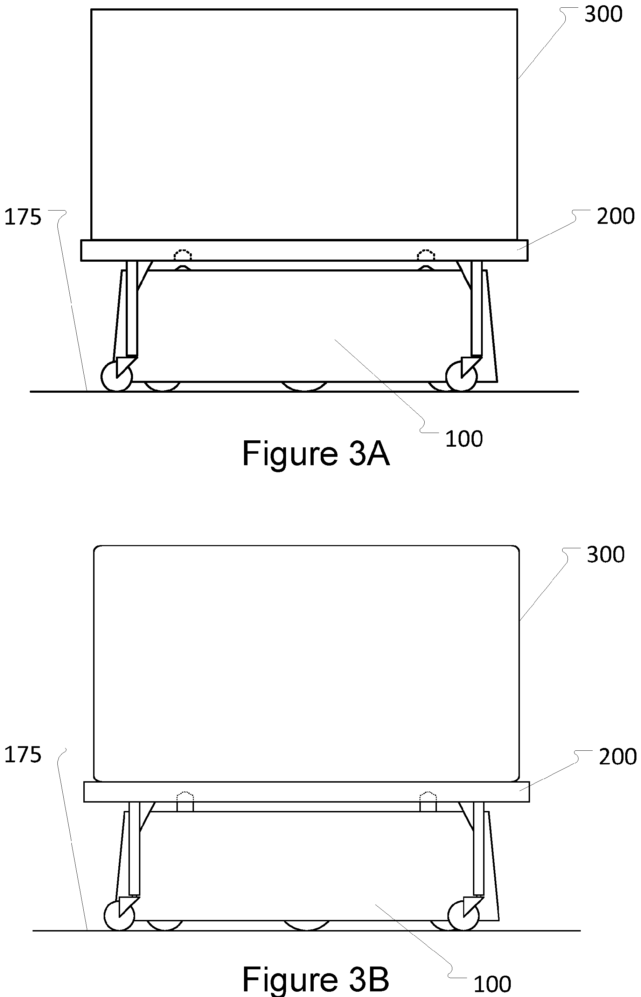

In some embodiments and as illustrated (see also Figs. 3A and 3B), the robot is configured or designed to be able to be fully under the cart in order to engage it, and it may even fully lift the cart. In some such embodiments (with four cart engagement elements), arranging the cart engagement elements respectively in or towards each corner will enable or promote stability.

Figure 2C schematically illustrates an exemplary embodiment of a cart to be used in connection with a mobile robot as disclosed herein.

Schematically illustrated is an embodiment of a cart 200 resting on a surface 175, where the cart 200 comprises a number of wheels, here as an example four non-active, e.g. swivel or similar, wheels 104', arranged with one wheel 104' at or toward a respective corner of the cart 200. The cart further comprises a resting or receiving surface 250 for receiving the payload (see e.g. 300 in Fig. 2D and elsewhere).

As illustrated, the cart 200 further comprises a number of robot engagement elements 210 configured to engage with the respective cart engagement elements (see 150 elsewhere) of the robot transporting the cart 200. In some embodiments and as illustrated, the robot engagement elements 210 are simply suitable receptacles or similar (one for each cart engagement element of the robot) mating with, connecting with, and/or at least being able to receive the cart engagement elements of the robot so that their respective surfaces touch and engage in a reliable way, preferably so the cart will not move or skid around (at least not too much) in relation to the robot. The robot engagement elements 210 could e.g. simply be a plate or planar surface or similar (with suitable cart engagement elements, e.g. also formed as one or more plates or planar surfaces) given enough friction therebetween during use is provided. In some embodiments, it is possible to lock the connection(s) between the robot engagement element(s) 210 and the respective cart engagement element(s).

As mentioned, it need not necessarily be a cart that is the payload transport vehicle as disclosed herein. It may e.g. be a cage, cabinet, etc. or even a more or less planar platform. The cart, etc. may be fully open (if sufficient friction of the surface 250 is provided in relation to the received/supported payload(s)) but can also be fully closed (with access door(s) or lid(s) or similar), and everything in-between, e.g. be partly open with a railing or similar.

A more detailed example of a robot engagement element 210 is illustrated e.g. in Figs. 4A-B and 5A-B.

While not illustrated, the cart 200 may as mentioned - at least in some embodiments - comprise guide rails or similar to keep the payload or objects (e.g. bulk items) of the payload in place. However, given the typical weight of the payload in the present context, guide rails or similar may not necessarily be needed as the weight of the payload may ensure it stays in place but they can be added for additional security purposes.

Figure 2D schematically illustrates the cart of Figure 2C carrying a payload or similar.

Illustrated is the cart of Figure 2C but now illustrated with a payload or similar 300 to be transported resting upon or received by the resting or receiving surface of the cart 200. It is to be understood that the illustrated form of the payload 300 is highly idealised/stylised and can in practice be any suitable shape and form and even comprise a number of separate objects.

Figures 3A and 3B schematically illustrate the mobile robot of Figures 2A and 2B and the cart carrying a payload of Figure 2D, with the mobile robot being in two different configurations, respectively.

Illustrated is a mobile robot 100 and a cart 200 currently comprising a payload 300 where the robot is to transport the cart 200.

Figure 3A schematically illustrates the robot 100 in a non-extended or non-engaged configuration where its cart engagement elements 150 are retracted. As seen, the robot 100 in this configuration fits fully under the resting or receiving surface 250 of the cart 200 and in between the wheels 104' of the cart 200 and the legs of the cart 200 that the wheels are mounted on. Accordingly, the cart 200 can also be designated as an overlying cart 200.

The robot 100 can then (autonomously in case of an AMR using various sensors and functional as generally known by itself) drive in under the cart so its cart engagement elements 150 are aligned with the corresponding robot engagement elements 210 of the cart 200. Once in place, the robot 100 can extend the cart engagement elements 150 to engage with the robot engagement elements 210, which is illustrated in Figure 3B.

Figure 3B schematically illustrates the robot 100 in an extended or engaged configuration where its cart engagement elements 150 are extended to engage with the robot engagement elements 210 of the cart 200.

As disclosed herein, the cart engagement elements 150 may also extend so as to lift the cart 200 at least in part or otherwise apply a force. As mentioned herein, this will control the load/the applied force thereof that is transferred to the robot (via the cart engagement elements 150) and further on to the active and non-active wheels 104, 104' of the robot thereby increasing the friction between the active wheels 104 and the surface 175 the robot is driving on in a controllable way. In the illustrated embodiment, the cart engagement elements 150 will or may also lock or fixate the cart 200. After securely engaging, the robot 100 can then simply move and thereby transport the cart 200 and payload 300 to a desired location, e.g. a working or processing station or other.

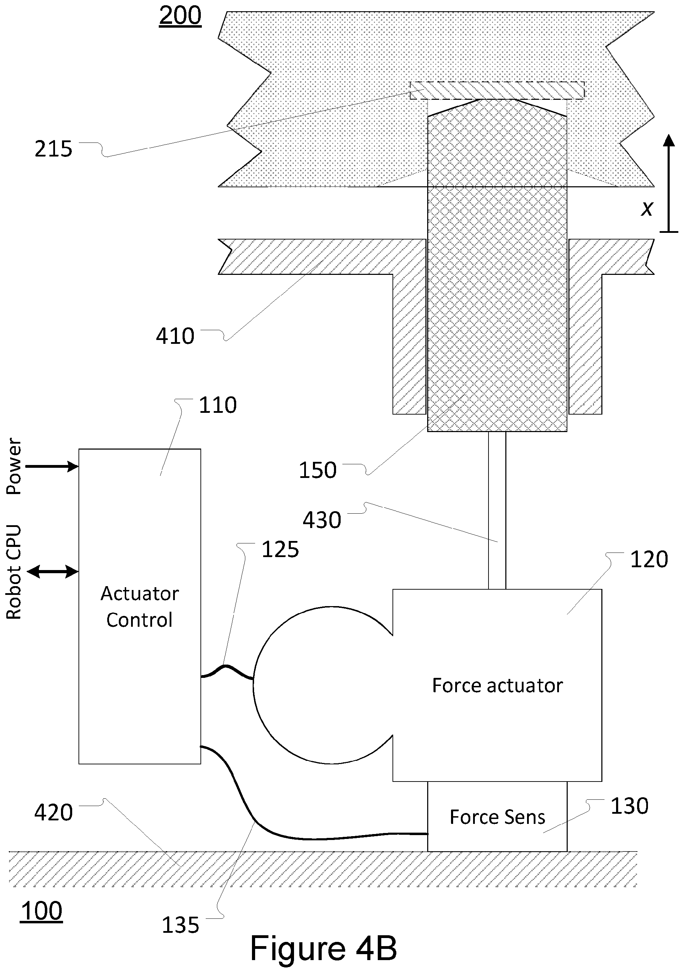

Figures 4A and 4B schematically illustrate a more detailed embodiment of elements of the mobile robot of Figure 1 in two different configurations.

Illustrated in Figure 4A is a part of a cross-sectional view of a robot 100 and a cart 200 as disclosed herein illustrating certain elements (according to some embodiments) in a more detailed manner. Illustrated is control element 110 herein the form of an actuator control element connected to a power supply (not shown) and to one or more overall processors and/or further control elements of the robot (not shown). Further illustrated is a force actuator 120 connected to receive a control signal 125 from the actuator control element 110, a force sensor 130 connected to provide a sensor signal 135 to the actuator control element 110, an internal support frame or structure 420, e.g. a chassis) of the robot 100, an upper surface 410 of the robot 100 (e.g. an upper surface of the chassis, i.e. 410 and 420 are parts of the same structure, at least in some embodiments), a movable (extendible and retractable) cart engagement element 150, a robot engagement element 210 (here in the form of a simple receiving receptacle), and an extension or connection shaft, pin, or the like 430 connecting the movable cart engagement element 150 and the force actuator 120, where the actuator 120, e.g. or preferably linearly, moves the shaft, pin, etc. 430 in a controlled manner thereby moving the cart engagement element 150. The illustrated embodiment further comprises a spring or resilient element arrangement (not shown; see e.g. 435 in Figure 5C) configured to apply a controllable force to the cart 200 in response to the spring or resilient element arrangement being compressed. In the illustrated embodiment, a spring or resilient element arrangement is integrated in (each of) the cart engagement elements 150. Alternatively, the spring or resilient element arrangement is external to the cart engagement element 150. As the cart engagement element 150, the force sensor 130, and the force actuator 120, the shaft/pin 430 (and when in contact the cart or more specifically, a force distribution and/or abutment plate (see in the following) and chassis of the cart) otherwise constitute a rigid mechanical system, the spring or resilient element arrangement may be arranged (in-line) at various locations (instead of being integrated with the cart engagement element 150), e.g. between the actuator 120 and the shaft/pin 430, between the actuator 120 and the force sensor 130, between the force sensor 130 and the structure 420, and so on. However, providing the spring or resilient element arrangement integrated with the cart engagement element 150 provides a very compact solution.

Further illustrated is a representation of a controllable force x, indicated by the arrow and the 'x' in the Figure (upper and to the right in the Figure between the surface 420 and cart 200), where x represents the current force, between no force being applied to the cart (whereby no part of the load of the cart is received by the mobile robot via the payload transport vehicle engagement element(s)) and (at least) enough force being applied to fully lift the cart (whereby the maximal possible load of the cart is received by the mobile robot via the payload transport vehicle engagement element(s)) where the arrow indicates the direction of the applied force (applied to the cart from the robot/the cart engagement element 150). For embodiments comprising a spring or resilient element arrangement as disclosed herein, no force is when the cart engagement element 150 are not extended enough to touch the cart 200 and enough force (maximum load transferred) is from when the cart engagement element 150 are extended to just begin to lift the cart 200 (further extending and further lifting will in practicality not increase the load any further, although the cart can be further lifted (e.g. for other purposes)). A value of x = 0 (or 0%) is no applied force and a value of x = 1 (or 100%) is applied force just enough to lift the cart. In the illustrated embodiment, the direction of applied force is vertical, i.e. directly upwards from the robot 100.

The position/extension of the cart engagement element(s) 150 at min/x=0% and/or max/x=100% may be different depending on specific embodiment and may e.g. depend on the specific design of the robot 100 and the specific design of the cart 200 (e.g. the height of the robot, the difference in height between the robot 100 and the cart 200, the distance between the surface the cart is standing on and the lower surface of the cart that is to be engaged by the cart engagement element(s) 150, etc.).

In some preferred embodiments and as illustrated the cart or more specifically the robot engagement element 210 further comprises a force distribution and/or abutment plate, part, or surface 215 that the cart engagement element 150 will touch and press against when the robot 100 and the cart 200 is aligned properly.

The force distribution and/or abutment plate, part, or surface 215 may e.g. be a strengthened or reinforced part of the cart 200 and may e.g. consist of or comprise a steel plate or other, so as to better bear the pressure force of the cart engagement element 150 when pressing against the cart 200.

As controlled by the actuator, the engagement element 150 will move in the direction given by the (vertical) arrow until the engagement element 150 touches and increasingly press against the surface of the cart 200 or the force distribution and/or abutment plate, part, or surface 215 thereby increasing x. As mentioned, in some embodiments, the engagement elements 150 of the robot will be able to completely lift the cart 200 where then a maximum possible load or applied force is transferred to the robot 100 and its wheels (including its active wheel(s)) (not shown here).

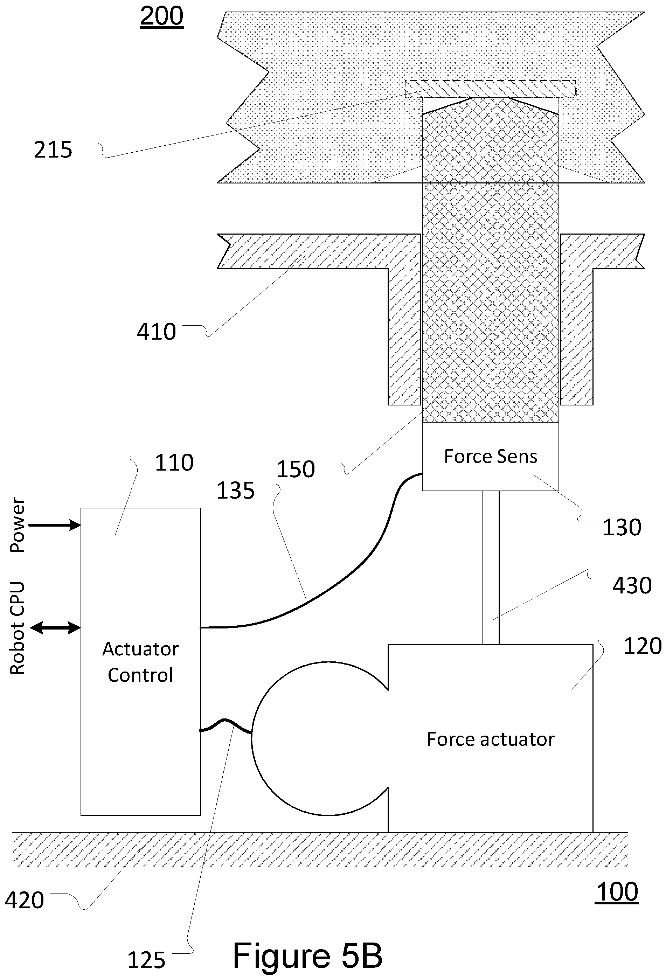

In the illustrated embodiment, the force sensor 130 is arranged against the internal support frame or structure 420 where the actuator 120 (with the extension shaft, etc. 430 and the connected cart engagement element 150) is arranged (more or less) directly on top of the force sensor 130, which in an effective and expedient way will transfer the force/load from the cart to the robot (via its internal support frame or structure) and at the same time obtain a reliable reading of the applied force. Other embodiments may comprise a different layout or arrangement of components, e.g. as illustrated in Figures 5A and 5B.

Illustrated in Figure 4B is the same as in Figure 4A but where the engagement element 150 has been extended so the engagement element 150 touches the cart 200 and potentially applies pressure thereby transferring load or applied force or even lifts the cart 200 (thereby transferring a maximum possible load or applied force).

Figures 5A and 5B schematically illustrate a more detailed alternative embodiment of elements of the mobile robot of Figure 1 in two different configurations.

The illustrated embodiment corresponds to the one of Figures 4A and 4B except that here the force actuator 120) is arranged against the internal support frame or structure 420 rather than the force sensor 130 and where the extension or connection shaft, pin, etc. 430 of the actuator is connected to the force sensor 130 arranged at the bottom of the cart engagement element 150. This arrangement will also work well. Figure 5A corresponds to Figure 4A (the cart engagement element 150 does not engage with the cart and no load or applied force is transferred to the robot) and Figure 5B corresponds to Figure 5A (the cart engagement element 150 engages with the cart at least to some extent and at least some load or applied force is transferred to the robot).

An advantage of the arrangement in Figures 4A and 4B over that of Figures 5A and 5B is that in 4A/4B the wire(s) or connection(s) (carrying the sensor signal(s) 135) does not need to move as the sensor remains stationary during operation, which it doesn't in 5A/5B, which reduces the complexity of the construction (of 4A/4B).

Figure 5C schematically illustrates one, more detailed, exemplary embodiment of a payload transport vehicle engagement element.

Schematically illustrated is (a part of) an exemplary embodiment of a payload transport vehicle engagement element 150 illustrated together with (a part of) an extension or connection shaft, pin, or the like 430 (see e.g. Figure 4A and elsewhere) where a preloaded or pretensioned spring or resilient element arrangement or similar 435 connects the payload transport vehicle engagement element 150 and the shaft, pin, or the like 430.

The extension or connection shaft, pin, or the like 430 is rigidly connected to an actuator (see e.g. 120 elsewhere) and moving the shaft or pin 430 in the direction of the illustrated arrow will move the payload transport vehicle engagement element 150 in the direction of the arrow until the payload transport vehicle engagement element 150 abuts against an element or surface (i.e. against the payload transport vehicle 200, e.g. its force distribution and/or abutment plate 215) whereafter further movement of the shaft or pin 430 will compress the spring or resilient element arrangement 435 causing a force x to be applied via the payload transport vehicle engagement element 150 to the payload transport vehicle 200 in turn transferring at least a part of the load of the payload transport vehicle 200 to the mobile robot 100. As the shaft or pin 430 is moved further (in the direction of the arrow), the spring or resilient element arrangement 435 will compress further applying a greater force x to the payload transport vehicle 200 increasing the load on the robot 100. This can continue until the payload transport vehicle is lifted completely off the ground where further movement of 430 just will lift the payload transport vehicle further and not practically speaking will increase the load any further.

As mentioned, such a spring or resilient element arrangement 435, or a corresponding one (as mentioned 435 may be located elsewhere), has the further advantage of smoothing out movement between the robot and the payload transport vehicle, e.g. caused by an irregular movement surface for the robot.

Alternatively, other arrangements may be envisaged, in particular ones that more directly transfer a force from the robot (e.g. or preferably its payload transport vehicle engagement element(s) 150) to the payload transport vehicle.

Figures 6A and 6B schematically illustrate relevant forces working on the mobile robot and the cart carrying a payload when the mobile robot is in two different configurations.

Illustrated in Figure 6A is a payload 300 resting on a cart 200 resting on the surface 175 via its non-active wheels 104' and a robot 100 resting on the surface 175 via its wheels 140 where the cart and the robot are illustrated together with the forces acting on the various items in the situation where the cart engagement element(s) (here four as an example) does not engage completely (they are illustrated where they engage so the connection is locked but no force is transferred yet) with the cart as disclosed herein (i.e. the non-extended or non-engaged configuration) whereby no (vertical) force or load of the cart is transferred to the robot 100 and its wheels (including its active wheels 140).

Illustrated are the forces relating to the robot 100, i.e. the force F_{R} due to the robot's weight that is acting on its wheels (non-active 140' and active 140 wheel(s)) and the total force F_{T} due to the wheels acting on the surface (being equal to the resultant robot force F_{R} in the illustrated situation) where a part of the force F_{T}/F_{R} is transferred to the active wheels as traction force. Generally, the force F_{R} is divided between all the wheels of the robot 100 as governed by its suspension or suspension system that e.g. or preferably is optimised to distribute a relatively large proportion of the force F_{R} to the active wheels.

Further illustrated are the forces relating to the cart 200, i.e. the force F_{L} due to the weight of the payload 300 that is acting on the cart 200, the force F_{C} due to the isolated weight of the cart (i.e. without the weight of the payload), and the force due to the non-active wheels 104' acting on the surface 175 (being equal to combined force F_{L} + F_{C}). The combined force F_{L} + F_{C} is typically distributed equally between the all the wheels 104' of the cart. The cart engagement elements correspond to the ones explained in connection with Fig 5C, i.e. comprises a spring or resilient element arrangement as illustrated in Fig. 5C or alternatively as described elsewhere.

Illustrated in Figure 6B is the same robot 100, cart 200, and payload 300 of Figure 6A but now in the situation or configuration where the cart engagement element(s) (here four as an example) engage with the cart as disclosed herein whereby force or load is transferred to the robot 100 and its wheels (active 140 and non-active 140'). The cart engagement elements are extended so as to apply a force Fₓ to the cart 200 whereby (in case x Is greater than 0) at least a part of the load or applied force of the cart 200 (and its payload 300) is transferred as represented by the proportion x where x being 0 (or 0%) signify no force Fₓ is applied by the cart engagement elements to the cart 200 and therefor that no load or applied force from the cart 200 is transferred to the robot 100 (i.e. the cart engagement elements do not engage with the cart or does at least not transfer any force) and a value of x being 1 (or 100%) signify that the full load or applied force (due to the weight of the cart 200 and its payload 300) is transferred to the robot 100, which will be when the cart engagement elements provide just enough force Fₓ to the cart 200 so the entire cart 200 have just begun to be fully lifted (with its payload). Further illustrated are the respective forces acting on the various items where at least some load or applied force due to the cart 200 and its payload 300 is transferred, i.e. x is between more than (and not equal to) 0 and equal to or less than 1.

As illustrated, the forces acting on the wheels of the cart is (1-x) · (F_{L} + Fc) that diminishes as x grows and the forces acting on the wheels of the robot is F_{T} = F_{R} + Fx = F_{R} + x · (F_{L} + Fc) that increases as x grows. The resultant force F_{T} is distributed equally among all the wheels (including the active wheels) of the robot 100, so increasing x will increase the force acting on the active wheels of the robot 100.

Figure 7 schematically illustrates a perspective view of a more detailed embodiment of a mobile robot, in particular an autonomous mobile robot, as disclosed herein.

Illustrated is a more realistic rendering of a mobile robot 100 as disclosed herein illustrating where four payload transport vehicle engagement elements 150 and the robots active wheels 140 and non-active wheels 140' (where only some are visible due to the perspective).

Some preferred embodiments have been shown in the foregoing, but it should be stressed that the invention is not limited to these but may be embodied in other ways within the subject matter defined in the following claims.

It should be emphasized that the term "comprises/comprising" when used in this specification is taken to specify the presence of stated features, elements, steps or components but does not preclude the presence or addition of one or more other features, elements, steps, components or groups thereof.

In the claims enumerating several features, some or all of these features may be embodied by one and the same element, component or item. The mere fact that certain measures are recited in mutually different dependent claims or described in different embodiments does not indicate that a combination of these measures cannot be used to advantage.

In the claims, any reference signs placed between parentheses shall not be constructed as limiting the claim. The word "comprising" does not exclude the presence of elements or steps other than those listed in a claim. The word "a" or "an" preceding an element does not exclude the presence of a plurality of such elements.

The mere fact that certain measures are recited in mutually different dependent claims does not indicate that a combination of these measures cannot be used to an advantage.

It will be apparent to a person skilled in the art that the various embodiments of the invention as disclosed and/or elements thereof can be combined without departing from the scope of the invention as defined in the claims.

## Claims

1. A mobile robot (100) configured to transport a payload transport vehicle (200) or the like, carrying, at least at some times, a payload (300), the mobile robot (100) comprising
- a payload transport vehicle engagement element (150),
- a load or force sensor (130) functionally connected (135) to the payload transport vehicle engagement element (150),
- a control element (110), and
- at least one active wheel or other active robot driving element (140) configured to the move the mobile robot (100) on a surface (175),
wherein
- the payload transport vehicle engagement element (150) is configured to engage with and apply a controllable force (Fₓ) to the payload transport vehicle (200) in response to a control signal (125), to be transported or being transported by the mobile robot (100), whereby the mobile robot (100) receives at least a part of a load of the payload transport vehicle (200) via the payload transport vehicle engagement element (150), where the received load of the payload transport vehicle (200) is proportional to the applied force (Fₓ),
- at least a part of the received load of the payload transport vehicle (200) is distributed to at least one of the at least one active wheel or other active robot driving element (140),
- the load or force sensor (130) is configured to determine or estimate a current load or force applied on or to the payload transport vehicle engagement element (150) by the load of the payload transport vehicle (200) and to provide a sensor signal (135) in response thereto, and
- the control element (110) is configured to receive the sensor signal (135) and to provide the control signal (125) in response to or as a function of the received sensor signal (135).

2. The mobile robot (100) according to claim 1, wherein the payload transport vehicle engagement element (150) comprises or is connected to a spring or resilient element arrangement (435) and is configured to apply the controllable force (Fₓ) to the payload transport vehicle (200) in response to the spring or resilient element arrangement (435) being pushed or compressed.

3. The mobile robot (100) according to claim 2, wherein the mobile robot (100) comprises an actuator (430) configured to compress, directly or indirectly, the spring or resilient element arrangement (435) in response to the control signal (125), by applying a force or by moving an element (430) connected to the actuator (430).

4. The mobile robot (100) according to any one of claims 1 - 3, wherein the payload transport vehicle engagement element (150) is configured to extend out and/or away from the mobile robot (100) in order to securely engage with the payload transport vehicle (200).

5. The mobile robot (100) according to any one of claims 1 - 4, wherein the payload transport vehicle engagement element (150) is configured to extend out and away from an upper surface (410) of the mobile robot (100) in a vertical or substantially vertical direction.

6. The mobile robot (100) according to any one of the previous claims, wherein the mobile robot (100) comprises at least one, e.g. or preferably three or four, payload transport vehicle engagement elements (150) and a load or force sensor (130) for each payload transport vehicle engagement elements (150), wherein the load or force sensor (130) for a particular payload transport vehicle engagement element (150) is configured to determine or estimate a current load applied on or to the particular payload transport vehicle engagement element (150) by the respective load of the payload transport vehicle (200).

7. the mobile robot (100) according to any one of the previous claims, wherein the mobile robot (100) comprises a plurality of payload transport vehicle engagement elements (150), wherein each payload transport vehicle engagement element (150) engage is configured to apply a respective controllable force (Fₓ) to the payload transport vehicle (200) in response to a respective control signal (125).

8. The mobile robot (100) according to any one of the previous claims, wherein at least a portion, e.g. all, of the mobile robot (100) has a height enabling the at least a portion of the mobile robot (100) to fit under the payload transport vehicle (200) when engaged by payload transport vehicle engagement element (150).

9. The mobile robot (100) according to any one of the previous claims, wherein the mobile robot (100) comprises
- an upper surface (410) comprising an opening (440) for each payload transport vehicle engagement element (150), a respective opening (440) configured to receive a respective payload transport vehicle engagement element (150) and allow movement thereof,
- an actuator (120) for each payload transport vehicle engagement element (150), the actuator respectively configured to move, preferably linearly move, a respective payload transport vehicle engagement element (150) in response to a respective control signal (125), and
- an internal support frame or structure (420),
wherein the actuator (120) and the load or force sensor (130) of a particular payload transport vehicle engagement element (150) is arranged between the particular payload transport vehicle engagement element (150) and the internal support frame or structure (420)
- where the load or force sensor (130) is arranged closest to the internal support frame or structure (420), the actuator (120) is arranged second closest to the internal support frame or structure (420), and the particular payload transport vehicle engagement element (150) is arranged most distant to the internal support frame or structure (420), or
- where the actuator (120) is arranged closest to the internal support frame or structure (420), the load or force sensor (130) is arranged second closest to the internal support frame or structure (420), and the particular payload transport vehicle engagement element (150) is arranged most distant to the internal support frame or structure (420).

10. The mobile robot (100) according to any one of the previous claims, wherein the mobile robot (100) is configured to
- increase the amount of the controllable force (Fₓ), applied by the at least one payload transport vehicle engagement element (150), until the control element (110) determines that the load of the payload transport vehicle (200) received by the mobile robot (100), as determined or estimated by the load or force sensor (130), does not change any further,
- reduce the amount of applied controllable force (Fₓ) from that level until the control element (110) determines that the load of the payload transport vehicle (200) received by the mobile robot (100), as determined or estimated by the load or force sensor (130), is at a predetermined level of applied force.

11. The mobile robot (100) according to any one of the previous claims, wherein the at least one payload transport vehicle engagement element (150) is or comprises a pin, a peg, a rod, a mandrel, plate or other planar element, and/or any other suitable payload transport vehicle engagement element (150).

12. The mobile robot (100) according to any one of the previous claims, wherein
- the at least one payload transport vehicle engagement element (150) are at least partly received internally by the mobile robot (100),
- the mobile robot (100) comprises one or more non-active support wheels or other non-active robot driving element (140'), e.g. swivel or castor wheels,
- the payload transport vehicle (200) is a wheel borne cart (200), cage, or payload transport platform, and/or
- the mobile robot (100) is an autonomous mobile robot (AMR).

13. The mobile robot (100) according to any one of claims 1 - 12, wherein the mobile robot (100) comprises a top-module, where the top-module comprises:
- the payload transport vehicle engagement element (150),
- the load or force sensor (130) functionally connected (135) to the payload transport vehicle engagement element (150), and
- the control element (110),
instead of the mobile robot (100).

14. A payload transport system comprising
- a mobile robot (100) according to any one of claims 1 - 13, and
- a payload transport vehicle (200) or the like, carrying, at least at some times, a payload (300), wherein the payload transport vehicle (200) is a wheel borne cart (200), cage, cabinet, or payload transport platform comprising a number of non-active wheels or other non-active driving elements (104'), e.g. swivel or castor wheels and comprise one or more of robot engagement elements (210) configured to mate, connect, match with and/or otherwise accommodate or receive the corresponding payload transport vehicle engagement elements (150) of the mobile robot (100) or its top-module.
